# EUROPÄISCHE PATENTSCHRIFT

(11) **EP 0 459 365 B1**
(45) Veröffentlichungstag und Bekanntmachung des Hinweises auf die Patenterteilung: **10.11.1993**
(21) Anmeldenummer: 91108615.5
(22) Anmeldetag: 28.05.1991
(51) Int. Cl.: F16B 35/06, G01N 29/04, F16B 23/00

(54) **Befestigungsschraube**
Fastening screw
Vis de fixation

(30) Priorität: 01.06.1990 DE 4017726
(43) Veröffentlichungstag der Anmeldung: 04.12.1991
(73) Patentinhaber: Kamax-Werke Rudolf Kellermann GmbH & Co. KG, D-37520 Osterode (DE)
(72) Erfinder: Mages, Walter, W-6320 Alsfeld 1 (DE); Jende, Siegfried, W-3360 Osterode am Harz (DE)
(74) Vertreter: Rehberg, Elmar, Dipl.-Ing.

(56) Entgegenhaltungen:
- DE-A- 1 750 861
- DE-A- 1 911 616
- DE-A- 2 311 935
- DE-A- 3 504 522

## Beschreibung

Die Erfindung bezieht sich auf eine Befestigungsschraube mit einem zumindest teilweise mit einem Gewinde versehenen Schaft und einem Betätigungsende, an dem ein Kopf, ein Stiftansatz o. dgl. vorgesehen sind, wobei am Betätigungsende der Befestigungsschraube eine erste Endfläche und am freien Ende des Schafts eine zweite Endfläche vorgesehen sind. Eine solche Befestigungsschraube kann somit beispielsweise als Kopfschraube mit Sechskantkopf, als Schraubenbolzen in Verbindung mit ein oder zwei Muttern oder auch als Stiftschraube mit einer Mutter eingesetzt werden.

Befestigungsschrauben dieser Art sind bekannt. Es ist ebenfalls bekannt, Ultraschallmessungen an solchen Befestigungsschrauben durchzuführen, um auf diese Art und Weise Vorspannkräfte zu ermitteln. Für eine solche Ultraschallmessung müssen jedoch die Befestigungsschrauben in besonderer Weise vorbereitet bzw. bearbeitet werden. Die Befestigungsschrauben werden zu diesem Zweck an ihren beiden Endflächen, also beispielsweise auf der Endfläche am einen Ende der Schraube, beispielsweise am Kopf, sowie am anderen Ende der Schraube, der sogenannten Kuppenseite, auf der gesamten, jeweiligen Endfläche plangeschliffen, wobei dabei gleichzeitig mehrere Schrauben einer Prüfserie auf eine definierte Ausgangslänge gebracht werden, die lediglich zwischen 0,05 und 0,1 mm schwanken darf. Außerdem müssen die beiden Schleifvorgänge planparallel durchgeführt werden, wobei eine Toleranz in der Planparallelität von 0,1 mm zueinander eingehalten werden muß. Diese der Prüfung zu unterziehenden Befestigungsschrauben werden dann mit Hilfe einer Zerreißmaschine kalibriert, indem jeweils eine Befestigungsschraube in eine Zerreißmaschine zunächst ohne Kraftaufbringung eingespannt und dabei die Ausgangslänge mittels Ultraschall ermittelt wird. Die Befestigungsschraube steht bei dieser ersten Messung nicht unter Spannung. Sodann werden unterschiedliche Kräfte nacheinander definiert auf die Schraube aufgebracht und es wird die zugehörige Längung mittels Ultraschall ermittelt. Dabei wird ein Ultraschallkopf auf die eine Meßfläche, beispielsweise die am Ende des Kopfs der Befestigungsschraube, aufgesetzt und es wird die erforderliche Kopplung herbeigeführt. Auf diese Art und Weise erhält man ein Kraft/Weg-Diagramm, welches sich üblicherweise bis zur Streckgrenze erstreckt, aber auch streckgrenzenüberschreitend aufgenommen werden kann. Die Genauigkeit oberhalb der Streckgrenze weist eine größere Toleranz auf, da es im Material der Befestigungsschraube bei einer solchen streckgrenzenüberschreitenden Beanspruchung zu Gefügeveränderungen kommt, in deren Folge eine andere Laufgeschwindigkeit der Ultraschallwellen auftritt. Mit solchen Prüfschrauben werden nun die Verbindungen unter Serienbedingungen oder seriennahen Bedingungen montiert. Nach Abschluß der Montage wird wiederum eine Ultraschallmessung an der montierten Befestigungsschraube durchgeführt. Dabei wird die Längung der montierten Schrauben bestimmt und über das Kraft/Weg-Diagramm auf die aufgebrachte Vorspannkraft rückgeschlossen. Insoweit kann auch festgestellt werden, z. B. nach längerer Betriebszeit, ob und wie sich die Vorspannkräfte verändert haben.

Es ist weiterhin bekannt, beim Montieren und Anziehen von Befestigungsschrauben Ultraschallwellen einzusetzen und diese gleichzeitig in einen hörbaren Bereich zu transformieren. Während des Anziehvorgangs, bei dem die Befestigungsschrauben noch nicht gelängt ist, liegt ein vergleichsweise tiefer Ton vor, der beim Anziehen der Schraube zu einem höheren bis schrillen Ton ansteigt. Das Auftreten dieses schrillen Tons zeigt das Erreichen der Streckgrenze an, so daß bei einem gewünschten Anziehvorgang bis zur Streckgrenze der Anziehvorgang insoweit beendet werden kann. Unter diesen Bedingungen werden z. B. hochwertige Maschinenelemente unter Kleinserienbedingungen montiert und überprüft.

Nachteilig ist in allen Fällen, daß die gesamten Endflächen plangeschliffen werden müssen, was einen erheblichen zusätzlichen Bearbeitungsaufwand bedeutet. Nachteilig ist weiterhin die Einhaltung einer Ausgangsschraubenlänge und einer Planparallelität der Endflächen in den angegebenen Toleranzen. Schließlich muß die Endfläche, an der der Ultraschallkopf angesetzt werden soll, zwecks Ankopplung mechanisch blank sein, damit die erforderlichen Ankoppelbedingungen geschaffen sind. Eine solche mechanisch blanke Oberfläche ist aber anfällig gegen Korrosion, so daß die Aufbringung von Dünnschichtlacken, die zum Korrosionsschutz an dieser Stelle eingesetzt werden könnten, nicht möglich ist. Durch das nachträgliche Planschleifen der beiden Endflächen werden Kennzeichnungen, die sich gewöhnlich auf der dem Betätigungsende der Befestigungsschraube zugekehrten Endfläche befinden, mit abgeschliffen. Damit werden Kennzeichnungsvorschriften bei hochfesten Schrauben verletzt.

Aus der DE-A-35 04 522 ist ein Verfahren und eine Vorrichtung zum Ultraschallprüfen von eingedrehten Schlitzschrauben auf Anrisse bekannt. Hierbei wird ein Prüfkopf jeweils auf eines der vier Segmente aufgesetzt, in die der Kopf der Schlitzschraube durch die kreuzförmig verlaufenden Schlitze eingeteilt ist. Aus dem Meßsignal läßt sich ermitteln, ob eine Rißbildung in den Übergangsbereich zwischen Kopf und Schaft der Schlitzschraube vorliegt. Bei der Ausbildung von Rissen treten Reflexionen der Ultraschallwellen auf, die durch eine kurze Laufzeit gekennzeichnet sind. Zur Überprüfung von Vorspannkräften auf die Schlitzschraube sind das bekannte Verfahren und die bekannte Vorrichtung nicht vorgesehen.

Aus der DE-A-17 50 861 ist eine Befestigungsschraube mit einem Kopf und einem zumindest teilweise mit einem Gewinde versehenen Schaft bekannt, wobei das Betätigungsende der Befestigungsschraube an dem freien Ende des Schafts vorgesehen ist. Dabei ist in einer Endfläche an dem freien Ende des Schafts eine unrunde Vertiefung für den Angriff eines Werkzeugs, beispielsweise eines Innensechskantschlüssels, vorgesehen. Die Grundfläche dieser Vertiefung verläuft kegelmantelförmig zu der Haupterstreckungsrichtung der bekannten Befestigungsschraube und ist daher als Reflexionsfläche zur Durchführung von Ultraschallmessungen an der Befestigungsschraube nicht geeignet.

Der Erfindung liegt die Aufgabe zugrunde, eine Befestigungsschraube der eingangs beschriebenen Art bereitzustellen, die eine wirtschaftliche Herstellung ermöglicht und gleichzeitig zu Ultraschallmessungen mit zumindest gleich guten Ergebnissen eingesetzt werden kann wie bisher.

Erfindungsgemäß wird dies dadurch erreicht, daß in beiden Endflächen Meßflächen für eine Ultraschallmessung mit einer Planparallelität von 0,1 mm vorgesehen sind, die sich nur über einen Teil der Endflächen erstrecken und zu den Endflächen im Sinn einer Erhöhung und/oder Vertiefung axial versetzt angeordnet sind. Damit werden innerhalb der Endflächen gesonderte Meßflächen geschaffen, die sich nicht mehr über die relativ große Fläche der Endflächen erstrecken, sondern nur einen Bruchteil der Größe der Endflächen aufweisen, wobei der Anteil von der absoluten Größe der Befestigungsschraube abhängig ist. Bei kleineren Schrauben werden die Meßflächen noch einen vergleichsweise großen Anteil aufweisen, bei größeren Schrauben wird das Verhältnis der Größe der Meßfläche zur Endfläche kleiner. Diese gesondert zu den Meßflächen und außerhalb deren Ebene vorzusehenden Meßflächen können einfacher hergestellt werden, da es sich grundsätzlich um die Bearbeitung kleinerer Flächen handelt. Diese Meßflächen können bei der Herstellung in einfacher Weise so angebracht werden, daß sich eine in dem zulässigen Toleranzbereich definierte Ausgangslänge, also die Entfernung zwischen den beiden Meßflächen, einhalten läßt, und zwar auch bei Anordnung von Endflächen, für deren Entfernung eine größere Toleranz zulässig ist. Überraschenderweise können solche gesonderten Meßflächen durch Kaltumformung hergestellt werden, so daß der Bearbeitungsschritt des Planschleifens entfällt. Durch eine solche Kaltumformung wird auch eine ausgezeichnete Planparallelität erreicht. Insoweit kommt es nur noch auf die Planparallelität der Meßflächen, nicht aber der Endflächen der Befestigungsschraube, an. Insbesondere dann, wenn die Meßflächen in Form von Vertiefungen an den Endflächen vorgesehen sind, werden geschützte Flächenbereiche geschaffen, an denen keine mechanische Verletzungen während des Transports und der Handhabung der Schrauben bis zu ihrer Montage zu erwarten sind. Aber auch die Verwendung von Erhöhungen, also nach außen überstehenden Meßflächen, die sich aus den Endflächen heraus erheben, ist möglich. In beiden Fällen wird durch den axialen Versatz erreicht, daß der Ultraschall-Meßkopf unter einer gewissen Zentrierwirkung auf die zugehörige Meßfläche aufgesetzt und dabei leichter angekoppelt werden kann als bisher. Versuche haben ergeben, daß insbesondere bei erhöhten Meßflächen die Verwendung von Dünnschichtlacken möglich ist und keine nennenswerte Verfälschung des Meßergebnisses der Ultraschallmessung eintritt. Selbst aber wenn man - z. B. für Sonderzwecke - die Planparallelität der Meßflächen in noch engeren Grenzen halten will, ist es möglich, die Meßflächen in Form von Erhöhungen anzuordnen und die Meßflächen einem Planschleifvorgang zu unterziehen, wobei dann vorteilhaft nur die Meßfllächen und nicht etwa gleichzeitig auch die Endflächen plangeschliffen werden müssen. Die Anwendung von Dünnschichtlacken auf den Meßflächen bzw. auf der gesamten Oberfläche der Befestigungsschraube ergibt nicht nur günstigere und gleichmäßigere Reibungsverhältnisse, sondern stellt auch einen erheblichen Korrosionsschutz dar, so daß der weitere Vorteil entsteht, daß eine montierte Schraubenverbindung nach längerer Betriebszeit, z. B. nach 10 Jahren, ohne Weiteres einer Ultraschalluntersuchung ausgesetzt werden kann, um die Vorspannung bzw. Restvorspannung zu kontrollieren. Eine solche Aufgabenstellung ergibt sich beispielsweise im Kraftwerksbau.

Die Meßflächen können zweckmäßig mit ihrer Normalachse konzentrisch zu Achse der Befestigungsschraube angeordnet sein. Grundsätzlich wäre auch eine andere Anordnung denkbar. Eine gewisse Überlappung in axialer Projektionsrichtung der Meßflächen zueinander muß jedoch eingehalten werden. Die Meßflächen können ohne Weiteres frei von Schraubenkennzeichnungen gehalten werden. Schraubenkennzeichnungen können auf den verbleibenden Endflächen angebracht werden, wo sie für eine Ultraschallmessung nicht störend sind. Wenn die Kennzeichnungen in Form von Vertiefungen eingeschlagen werden, ist es sogar möglich, diese in den Meßflächen anzubringen.

Besonders vorteilhaft können die Meßflächen an den beiden Enden der Befestigungsschraube durch Kaltumformung gebildet sein. Hierdurch wird gleichzeitig eine Verdichtung des Materials erreicht mit einer ausgezeichneten Ebenheit, wie sie für das Ankoppeln des Meßkopfs und das Enstehen eines entsprechend deutlichen reflektierten Signals wünschenswert sind. Die für die beiden Meßflächen geforderte Planparallelität ist durch eine Kaltumformung ohne Weiteres beherrschbar und erreichbar.

Die Meßflächen können zum Ansetzen des Ultraschallschwingkopfs einen Durchmesser von bis zu 10 mm aufweisen. Bei einer Befestigungsschaube M 8 kann die Meßfläche zum Ansetzen des Ultraschall-Schwingkopfs 6 +/- 0,5 mm betragen. Bei einer Befestigungsschraube M 14 hat sich eine Meßfläche in Kreisform von 9 +/- 0,5 mm Durchmesser als zweckmäßig erwiesen.

Die nicht zum Ansetzen des Ultraschallschwingkopfs dienende Meßfläche, also in der Regel die Meßfläche, die dem Betätigungsende abgekehrt und an der Kuppenseite, also am freien Ende des Schraubenschafts, angeordnet ist, kann unabhängig von der Schraubenlänge einen Durchmesser im Bereich von 2 bis 4 mm aufweisen. Bei größeren Schrauben kann dieser Bereich auch überschritten werden. So wird für eine Schraube M 8 diese kuppenseitige Meßfläche einen Durchmesser von 2 bis 4 mm und bei einer Befestigungsschraube M 14 von 4 bis 7 mm aufweisen können.

Die Befestigungsschrauben sollten eine axiale Länge von Meßfläche zu Meßfläche mit einer Toleranz von +/- 0,4 mm aufweisen. Der axiale Versatz der Meßfläche zu der zugehörigen Endfläche kann in der Größenordnung von 0,1 bis 2,5 mm liegen. In der Ausbildung mit einem Innenangriff, z. B. als Innensechskantschraube, ist es möglich, daß die eine Meßfläche am Boden des Innenangriffs angeordnet ist. Diese Meßfläche erstreckt sich somit nicht normal zur Schraubenachse, sondern besteht aus mehreren schräggestellten Flächenteilen. Dies ist aber insgesamt nicht nachteilig.

Freilich muß die Form des Ultraschallschwingkopfs hierauf abgestimmt sein.

Bevorzugte Ausführungsbeispiele der Befestigungsschraube sind in den Zeichnungen dargestellt und werden im Folgenden beschrieben. Es zeigt:
- Figur 1: eine Seitenansicht einer Befestigungsschraube als Kopfschraube,
- Figur 2: eine Draufsicht auf den Kopf der Kopfschraube gemäß Figur 1,
- Figur 3: eine Teilansicht einer weiteren Befestigungsschraube im Kopfbereich,
- Figur 4: eine Teilansicht einer weiteren Befestigungsschraube im Bereich des Endes des Schafts der Schraube,
- Figur 5: eine Ansicht einer Stiftschraube und
- Figur 6: eine Ansicht einer Innensechskantschraube.

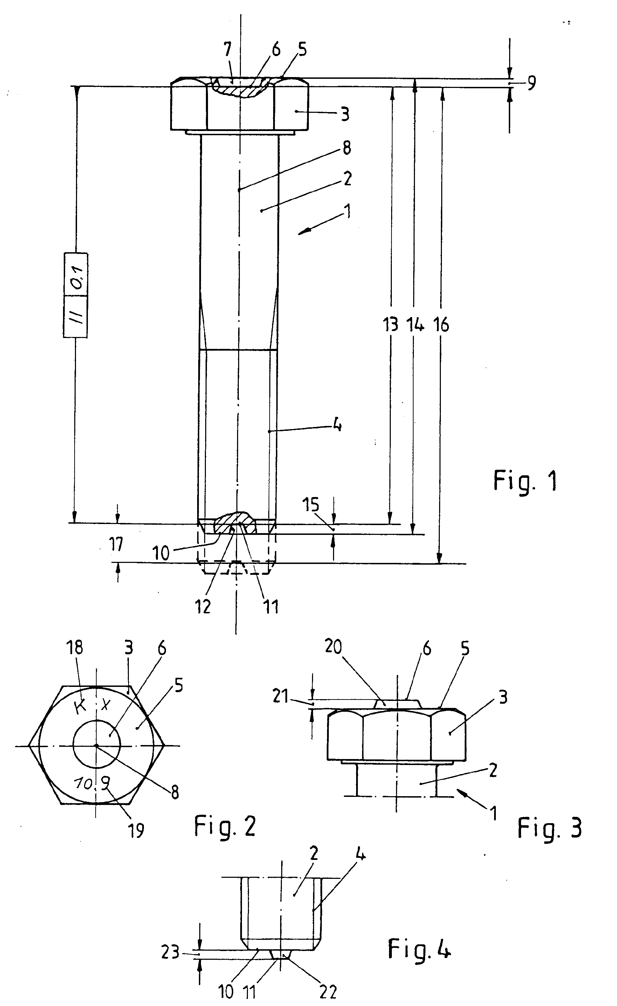

In Figur 1 ist eine Befestigungsschraube 1 dargestellt, die im wesentlichen einen Schaft 2 und einen Kopf 3 aufweist. Der Schaft 2 ist auf einem Teil seiner Länge mit einem Gewinde 4 versehen. Es ist unschädlich, wenn das Gewinde 4 über die gesamte Länge des Schafts 2 durchgehend vorgesehen ist. Der Kopf 3 stellt hier gleichzeitig das Betätigungsende der Befestigungsschraube 1 dar, also das Ende, bei dem hier durch einen Außenangriff die Betätigungskraft, also das Drehmoment zum Anziehen der Schraube während der Montage, aufgebracht wird. Auf der Oberseite des Kopfs 3 der Befestigungsschraube 1 ist als Kreisringfläche eine Endfläche 5 angeordnet und zusätzlich dazu eine Meßfläche 6 gebildet, die hier in Form einer Vertiefung 7 bzw. am Grund der Vertiefung 7 vorgesehen ist, so daß die Meßfläche 6 zur Endfläche 5 axial in Richtung der Achse 8 der Befestigungsschraube versetzt ist. Der Versatz 9 kann zwischen 0,1 bis 2,5 mm betragen.

Auch am anderen Ende der Befestigungsschraube 1, also am freien Ende des Schafts 2, ist zunächst eine Endfläche 10 und innerhalb dieser eine Meßfläche 11 angeordnet. Die Meßfläche 11 ist ebenfalls in einer Vertiefung 12 bzw. am Boden der Vertiefung 12 angeordnet. Der axiale Abstand zwischen den beiden Meßflächen 6 und 11 ist die Ausgangslänge 13, die durchaus unterschiedlich zur Länge 14 zwischen den beiden Endflächen 5 und 10 gewählt bzw. ausgebildet sein kann. Die Ausgangslänge 13 ist ein wesentliches Maß für die Ultraschallmessung. Der Versatz 15 zwischen der Endfläche 10 und der Meßfläche 11 kann ebenfalls in der Größenordnung von 0,1 bis 2,5 mm liegen.

In gestrichelter Linienführung ist in übertriebener Darstellung eine Längung der Befestigungsschraube 1 im vorgespannten Zustand angedeutet, wobei sich jetzt die Meßlänge 16 zwischen den beiden Meßflächen 6 und 11 ergibt, die wesentlich für die Größe der Vorspannkraft ist. Der Unterschied zwischen der Meßlänge 16 und der Ausgangslänge 13 stellt die Längenänderung 17 dar.

Figur 2 verdeutlicht die flächenmäßige Ausbildung und Anordnung der Endfläche 5 und der Meßfläche 6 am Kopf 3 der Befestigungsschraube 1. Es ist ersichtlich, daß Kennzeichnungen 18 und 19 im Bereich der Endfläche 5 angeordnet sind, während die Meßfläche frei von solchen Kennzeichnungen ist. Die Meßfläche 6 ist hier konzentrisch zur Achse 8 der Befestigungsschraube 1 vorgesehen.

Figur 3 zeigt eine Seitenansicht einer weiteren Ausführungsform der Befestigungsschraube und verdeutlicht, daß die im Bereich des Kopfs 3 vorgesehene Meßfläche 6 auch an einem Fortstz 20 bzw. einer Erhöhung gebildet sein kann, so daß sich hier ein negativer Versatz 21 ergibt.

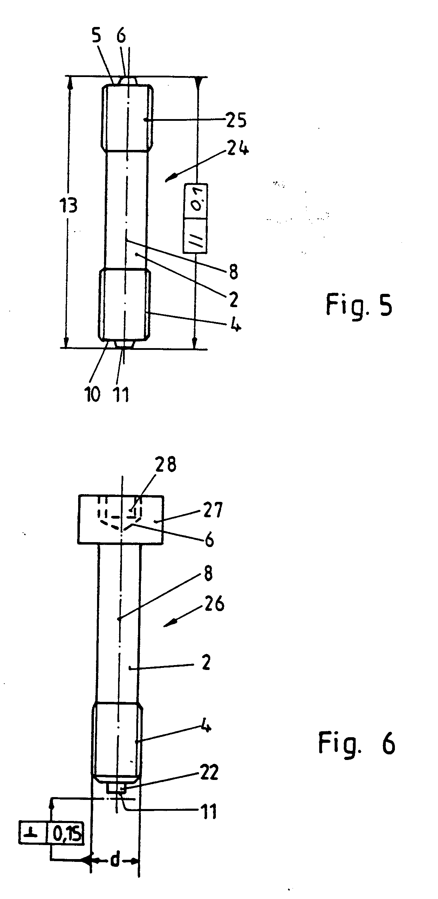

Analog kann im Bereich des Schafts 2, wie in Figur 4 dargestellt ist, die Meßfläche 11 an einem Fortsatz 22 bzw. einer Erhebung vorgesehen sein, die aus der Endfläche 10 vorstehend ausragt, so daß sich auch hier ein negativer Versatz 23 ergibt. Es ist nun so, daß an einer Befestigungsschraube 1 jegliche Kombination der Ausbildung von Meßflächen zu Endflächen vorgesehen sein kann. Entweder können die Meßflächen 6 und 11 beide an Vertiefungen oder beide an Erhöhungen oder jeweils im Rahmen einer Erhöhung und einer Vertiefung vorgesehen sein, so daß sich insgesamt vier Kombinationsmöglichkeiten ergeben.

Figur 5 zeigt eine Stiftschraube 24, die im Bereich des Schafts 2 einmal das Gewinde 4 aufweist. Auch am anderen Ende, also am Betätigungsende, ist ein Gewinde 25 vorgesehen. Auch diese Stiftschraube 24 weist am Beispiel von angebrachten Erhöhungen die Meßflächen 6 und 11 im Bereich der Endflächen 5 und 10 auf. Die Toleranz für die Ausgangslänge 13 ist hier angegeben.

Figur 6 zeigt eine Innensechskantschraube 26 mit einem Kopf 27 und einem Schaft 2 mit Gewinde 4. Im Kopf 27 ist die bekannte Ausnehmung 28 vorgesehen, deren schräg zur Achse 8 verlaufende Bodenflächen die Meßfläche 6 darstellen. Am freien Schaftende 2 ist im Rahmen eines Fortsatzes 22 die Meßfläche 11 verwirklicht. Es ist hier die Toleranz für die Rechtwinkligkeit der Meßfläche 11 zu dem Gewindeaußendurchmesser d angegeben.

### Bezugszeichenliste:

- 1: = Befestigungsschraube
- 2: = Schaft
- 3: = Kopf
- 4: = Gewinde
- 5: = Endfläche
- 6: = Meßfläche
- 7: = Vertiefung
- 8: = Achse
- 9: = Versatz
- 10: = Endfläche
- 11: = Meßfläche
- 12: = Vertiefung
- 13: = Ausgangslänge
- 14: = Länge
- 15: = Versatz
- 16: = Meßlänge
- 17: = Längenänderung
- 18: = Kennzeichnung
- 19: = Kennzeichnung
- 20: = Fortsatz
- 21: = Versatz
- 22: = Fortsatz
- 23: = Versatz
- 24: = Stiftschraube
- 25: = Gewinde
- 26: = Innensechskantschraube
- 27: = Kopf
- 28: = Ausnehmung

## Patentansprüche

1. Befestigungsschraube (1) mit einem zumindest teilweise mit einem Gewinde (4) versehenen Schaft (2) und einem Betätigungsende, an dem ein Kopf (3), ein Stiftansatz o. dgl. vorgesehen sind, wobei am Betätigungsende der Befestigungsschraube (1) eine erste Endfläche (5) und am freien Ende des Schafts (2) eine zweite Endfläche (10) vorgesehen ist, dadurch gekennzeichnet, daß in beiden Endflächen (5, 10) Meßflächen (6, 11) für eine Ultraschallmessung mit einer Planparallelität von 0,1 mm vorgesehen sind, die sich nur über einen Teil der Endflächen (5, 10) erstrecken und zu den Endflächen (5, 10) im Sinne einer Erhöhung und/oder Vertiefung axial versetzt angeordnet sind.

2. Befestigungsschraube nach Anspruch 1, dadurch gekennzeichnet, daß die Meßflächen (6, 11) mit ihren Normalachsen konzentrisch zur Achse (8) der Befestigungsschraube angeordnet sind.

3. Befestigungsschraube nach Anspruch 1 oder 2, dadurch gekennzeichnet, daß die Meßflächen (6, 11) frei von Schraubenkennzeichnungen (18, 19) sind.

4. Befestigungsschraube nach einem oder mehreren der Ansprüche 1 bis 3, dadurch gekennzeichnet, daß die Meßflächen (6, 11) an den beiden Enden der Befestigungsschraube (1) durch Kaltumformung gebildet sind.

5. Befestigungsschraube nach einem oder mehreren der Ansprüche 1 bis 4, dadurch gekennzeichnet, daß die Meßfläche (6) zum Ansetzen des Ultraschall-Schwingkopfs einen Durchmesser von bis zu 10 mm aufweist.

6. Befestigungsschraube nach einem oder mehreren der Ansprüche 1 bis 4, dadurch gekennzeichnet, daß die nicht zum Ansetzen des Ultraschall-Schwingkopfs dienende Meßfläche (11) abhängig von der Schraubenlänge einen Durchmesser im Bereich von 2 bis 4 mm aufweist.

7. Befestigungsschraube nach einem oder mehreren der Ansprüche 1 bis 6, dadurch gekennzeichnet, daß die Befestigungsschraube (1) eine axiale Länge (13) von Meßfläche (6) zu Meßfläche (11) mit einer Toleranz von +/- 0,4 mm aufweist.

8. Befestigungsschraube nach einem oder mehreren der Ansprüche 1 bis 7, dadurch gekennzeichnet, daß der axiale Versatz (9, 15. 21, 23) der Meßfläche (6 bzw. 11) zu der zugehörigen Endfläche (5 bzw. 10) etwa 0,1 bis 2,5 mm beträgt.

9. Befestigungsschraube nach einem oder mehreren der Ansprüche 1 bis 8, dadurch gekennzeichnet, daß in der Ausbildung mit einem Innenangriff, z. B. als Innensechskantschraube (26) die eine Meßfläche (6) am Boden des Innenangriffs angeordnet ist.

## Claims

1. Fastening bolt (1) comprising a stem (2), at least part of which is provided with a screw thread (4), and an operating end on which a head (3), a projecting pin or the like is provided, a first end face (5) being provided at the operating end of the fastening bolt (1) and a second end face (10) being provided at the free end of the stem (2), characterised in that measurement surfaces (6, 11) are provided in both end faces (5, 10) for ultrasonic measurement, with plane-parallelism of 0.1 mm, which extend only over a part of the end faces (5, 10) and are axially offset, in the form of a raised portion and/or depression, relative to the end faces (5, 10).

2. Fastening bolt according to Claim 1, characterised in that the measurement surfaces (6, 11) are disposed with their normal axes concentric to the axis (8) of the fastening bolt.

3. Fastening bolt according to Claim 1 or 2, characterised in that the measurement surfaces (6, 11) carry no bolt identification markings (18, 19).

4. Fastening bolt according to one or more of Claims 1 to 3, characterised in that the measurement surfaces (6, 11) at the two ends of the fastening bolt (1) are produced by cold forming.

5. Fastening bolt according to one or more of Claims 1 to 4, characterised in that the measurement surface (6) to which the ultrasonic oscillating probe is applied has a diameter of up to 10 mm.

6. Fastening bolt according to one or more of Claims 1 to 4, characterised in that the measurement surface (11) not used for the application of the ultrasonic oscillating probe has, depending on the length of the bolt, a diameter in the range from 2 to 4 mm.

7. Fastening bolt according to one or more of Claims 1 to 6, characterised in that the fastening bolt (1) has an axial length (13) from the measurement surface (6) to the measurement surface (11) with a tolerance of +/- 0.4 mm.

8. Fastening bolt according to one or more of Claims 1 to 7, characterised in that the axial offset (9, 15, 21, 23) of the measurement surface (6 or 11) relative to the appertaining end face (5 or 10) amounts to about 0.1 to 2.5 mm.

9. Fastening bolt according to one or more of Claims 1 to 8, characterised in that in the configuration comprising a recess, for example in the case of a hexagonal socket bolt (26), one measurement surface (6) is disposed at the bottom of the recess.

## Revendications

1. Vis de fixation (1) avec unetige (2) munie au moins partiellement d'un filetage (4) et une extrémité d'actionnement sur laquelle sont prévues une tête (3), une broche sans tête, ou autre, une première surface d'extrémité (5) étant prévue sur l'extrémité d'actionnement de la vis de fixation (1) et une deuxième surface d'extrémité (10) étant prévue sur l'extrémité libre de la tige (2),
**caractérisée** en ce que dans les deux surfaces d'extrémités (5, 10), sont prévues des surfaces de mesure (6, 11) pour une mesure par ultrasons, avec un parallèlisme des plans de 0,1 mm, lesquelles ne s'étendent que sur une partie des surfaces d'extrémités (5, 10) et sont décalées axialement par rapport aux surfaces d'extrémités (5, 10) au sens d'un bossage et/ou d'un renfoncement.

2. Vis de fixation selon la revendication 1, caractérisée en ce que les surfaces de mesure (6, 11) sont disposées avec leurs axes normaux concentriques à l'axe (8) de la vis de fixation.

3. Vis de fixation selon la revendication 1 ou 2, caractérisée en ce que les surfaces de mesure (6, 11) sont exemptes de marquages (18, 19) des caractéristiques de la vis.

4. Vis de fixation selon une ou plusieurs des revendication 1 à 3, caractérisée en ce que les surfaces de mesure (6, 11) sont formées par déformation à froid sur les deux extrémités de la vis de fixation (1).

5. Vis de fixation selon une ou plusieurs des revendications 1 à 4, caractérisée en ce que la surface de mesure (6) pour la pose de la tête vibrante à ultrasons présente un diamètre allant jusqu'à 10 mm.

6. Vis de fixation selon une ou plusieurs des revendications 1 à 4, caractérisée en ce que la surface de mesure (11) ne servant pas à la pose de la tête vibrante à ultrasons présente, indépendamment de la longueur de la vis, un diamètre de l'ordre de 2 à 4 mm.

7. Vis de fixation selon une ou plusieurs des revendications 1 à 6, caractérisée en ce que la vis de fixation (1) présente une longueur axiale (13), de la surface de mesure (6) à la surface de mesure (11), avec une tolérance de ± 0,4mm.

8. Vis de fixation selon une ou plusieurs des revendications 1 à 7, caractérisée en ce que le décalage axial (9, 15, 21, 23) des surfaces de mesure (6 et 11) par rapport à la surface d'extrémité (5 et 10) correspondante, est d'environ 0,1 à 2,5 mm.

9. Vis de fixation selon une ou plusieurs des revendications 1 à 8, caractérisée en ce que, dans la forme de réalisation avec une prise intérieure, par exemple sous la forme d'une vis (26) à six pans creux, la surface de mesure (6) est disposée dans le fond de la cavité de prise intérieure.
